# EUROPEAN PATENT APPLICATION

(11) **EP 1 650 089 A1**
(43) Date of publication of application: **26.04.2006**
(21) Application number: 05380230.2
(22) Date of filing: 17.10.2005
(51) Int. Cl.: B60R 25/10

(54) **Remote control device for anti theft alarm**

(30) Priority: 20.10.2004 ES 200402500 P
(71) Applicant: Fernandez, Hilario Alvaro, 28035 Madrid (ES)
(72) Inventor: Fernandez, Hilario Alvaro, 28035 Madrid (ES)

(57) **Abstract**

The objective of this invention, and its claims, is that it is a remote control device containing; a mobile phone unit, or radio receptor, a battery, as well as the capacity to send out both sound and light signals. It is also vehicle antitheft alarm system which contains a mobile telephone unit or a radio transmitter.

The description of the invention: This antitheft vehicle alarm system, when it is necessary for it to act, also carries out the function of activating either a mobile telephone unit or a radio transmitter, which are both integrated into the vehicle. The remote control device receives the signal and becomes activated, thus triggering sounds, lights, etc.
Applications: It takes care of the problem that antitheft vehicle alarms can no longer emit sounds which are above a specified level of decibels or continue to sound for an unspecified period of time.

## Description

### Technical Sector

This invention is comprised in the technical sector which corresponds to vehicle antitheft alarm systems.

### Technical State

Vehicle antitheft alarm systems are responsible for a reduction in vehicle break-in and theft attempts. These devices operate in two main ways:
a- Action on the vehicle's electronic or mechanical systems making it either difficult to start the engine or move the vehicle.
b- Activation of an alarm to call attention to the attempted theft by way of triggering the flashing of the vehicle's lights, sirens, or the honking of the horn at its loudest, either continuously or intermittently.
This, however, becomes a problem under the new noise legislation regarding the prohibition of alarms operating above a specified number of decibels and for a specific period of time thus making the main arguments for the use of vehicle antitheft alarm system untenable.

### Explanation of the investment

This is a complement to vehicle antitheft alarm systems which are, at times, ineffective.

With this invention, we can immediately know if someone has broken into our vehicle, even if we are far from the vehicle or inside an enclosed area. This also allows us to recognize whether this alarm corresponds to our vehicle or not.

It consists of a remote control device which, apart from being capable of containing other functions, including automatic vehicle locking and unlocking, it has a function which can indistinctly produce sound, light or vibration signals. This function is carried out upon the activation of the vehicle's own antitheft alarm system and is deactivated by pressing a button on the remote control device. In this way, even though the vehicle's antitheft alarm system has been annulled, our remote control device continues to emit signals until we disconnect it.

### Ways to make the invention operable.

One way to carry this out is to use mobile telephone terminals in such a way that when the system is activated, the vehicle antitheft alarm, in addition to its other functions, a mobile telephone unit is also activated which places a call to a preset number which can correspond to either our telephone or to the remote control device. The remote control contains an integrated mobile telephone terminal which receives and activates the sound signal function, etc.

The mobile telephone unit which is activated by the antitheft alarm system is powered by the vehicle battery by way of a transformer in the event it is necessary.

The mobile telephone unit which is integrated into the remote control contains a battery which can be recharged from the mains by way of a transformer, or from the vehicle.

### An other mode of operation

The application of radio transmission techniques. One radio transmission technique, which is very appropriate, is that for Unlicensed Radios (PMR 446) and is satisfactorily applied to walkie-talkies.

Communication is immediate as there is no need to dial numbers or wait for a dial tone, thus using the power of the vehicle's battery, or its own battery, we guarantee coverage up to several kilometres.

In this option there is a radio transmitter connected to the antitheft alarm system so that upon alarm activation, the radio-transmitter is activated and sends a signal to the radio-receiver which is integrated into the remote control and, thus, activates the signalling function.

### Industrial Application

Any radiotelephonic or mobile telephone company can carry out the application of this invention and study the method for its most comfortable and effective use as well as its optimum profitability.

## Claims

1. This is a remote control device which functions as a vehicle antitheft alarm, containing a mobile telephone unit, battery, and signalling system which can indistinctly produce lights, sounds or vibrations.

2. This is a remote control device which functions as a vehicle antitheft alarm containing a radio receptor, battery, and signalling system which can indistinctly produce lights, sounds or vibrations.

3. This is an antitheft vehicle alarm system which contains a mobile telephone unit inside the system.

4. This is an antitheft vehicle alarm system which contains a radio transmitter unit inside the system
